# EUROPEAN PATENT SPECIFICATION

(11) **EP 3 568 367 B1**
(45) Date of publication and mention of the grant of the patent: **07.07.2021**
(21) Application number: 18704299.9
(22) Date of filing: 15.01.2018
(51) Int. Cl.: B65G 59/02, B65G 61/00, B65H 3/02

(54) **SYSTEM AND METHOD FOR FEEDING DIAPHRAGM**
SYSTEM UND VERFAHREN ZUR MEMBRANBESCHICKUNG
SYSTÈME ET PROCÉDÉ D'AMENÉE DE DIAPHRAGME

(30) Priority: 16.01.2017 CN 201710029102
(43) Date of publication of application: 20.11.2019
(73) Proprietor: Tyco Electronics (Shanghai) Co. Ltd., Shanghai (CN); Measurement Specialties (China) Ltd., Shenzhen, Guangdong 518057 (CN); Innogetic Technology Co., Ltd., Zhuhai, Guangdong (CN)
(72) Inventor: DENG, Yingcong, Shanghai (CN); LIAO, Ziqing, Shanghai (CN); NING, Ke, Shanghai (CN); ZHANG, Dandan, Shanghai (CN); HU, Lvhai, Shanghai (CN); WONG, Kok Wai, Shanghai (CN)
(74) Representative: Grünecker Patent- und Rechtsanwälte PartG mbB
(86) International application number: PCT/IB2018/050240
(87) International publication number: WO 2018/131001

(56) References cited:
- EP-A2- 0 951 968
- US-A- 3 768 675
- US-A- 4 453 873
- US-A- 4 988 264
- US-A1- 2003 155 701

## Description

### BACKGROUND OF THE INVENTION

### Field of the Invention

Embodiments of the present disclosure relate to a system and method for feeding diaphragm.

### Description of the Related Art

EP 0 951 968 A2 discloses an article picking-up apparatus. A group of bolts are supplied onto a placing surface of a tray, an isolated bolt is searched for by a visual sensor, and its deviation from a standard position at the time of teaching is determined. The isolated bolt is picked up by a robot to which a picking-up operation is taught which making a correction of the shift. If no isolated bolt is found, a shaking device is operated to loosen the piled-up bolts, and an isolated bolt newly produced is again searched for by the visual sensor. The isolated bolt, if found, is picked up. The picking-up operation may be performed by searching for an isolated small set of bolts by using a three-dimensional visual sensor. Also, the piled-up bolts may be loosened or disentangled by using a robot equipped with a tool for levelling the pile of bolts or by using a gas jet. This document discloses a system suitable for feeding diaphragm according to the preamble of claim 1.

Diaphragms in electronic industry generally are formed as very thin metal pieces. During manufacturing and selling, the diaphragms usually are stacked together, and placed and sold in stacks. As a result, when using the diaphragm, it is necessary to separate a single diaphragm from stacks of diaphragms. However, the diaphragms are easy to be damaged or fold since they are very thin, and thus separation of diaphragms with high efficiency and quality is a challenging process.

In the prior art, there are no such devices adapted to separate a signal diaphragm from stacks of diaphragms with high efficiency and quality. Instead, a single diaphragm, in the prior art, is manually separated from stacks of diaphragms, which undoubtedly lowers separation efficiency of the diaphragm, is easy to damage the diaphragm and reduces the diaphragm quality.

### SUMMARY OF THE INVENTION

An objective of the present disclosure is to solve at least one aspect of the above mentioned problems and disadvantages occurred in the prior art.

At least one embodiment of the present disclosure provides a system for feeding diaphragm which may separate a single diaphragm from stacks of diaphragms with high efficiency and quality.

According to the present invention, there is provided a system for feeding diaphragm, comprising: a diaphragm separating device adapted to separate a single diaphragm from at least one stack of diaphragms; and a visual device adapted to identify the separated single diaphragm and the position of the separated single diaphragm; wherein the diaphragm separating device comprises: a diaphragm bin adapted to load at least one stack of diaphragms; and at least one set of diaphragm sweeping mechanism adapted to sweep a top of at least one stack of diaphragms, in order to separate a single diaphragm from the top of at least one stack of diaphragms; each of the set of diaphragm sweeping mechanism comprises a support frame adapted to move back-and-forth in a straight line; and a sweeping brush mounted on the support frame and adapted to move back-and-forth along with the support frame. When the sweeping brush moves back-and-forth along with the support frame, the sweeping brush sweeps the top of at least one stack of diaphragms, in order to separate the single diaphragm from the top of at least one stack of diaphragms; and wherein a pair of sliding rails extending in a straight line is provided at both sides of the diaphragm bin, the support frame being slidably installed on a pair of sliding rails in order to move back-and-forth along the pair of sliding rails.

According to another exemplary embodiment of the present disclosure, the support frame includes: a pair of support vertical arms of which lower portions are slidably installed on the pair of sliding rails respectively; and a support transverse arm of which both ends are connected to upper portions of the pair of support vertical arms, the sweeping brush being mounted on the support transverse arm.

According to another exemplary embodiment of the present disclosure, the support frame further includes a pair of brush connecting parts mounted on the support transverse arm and adapted to be connected to both ends of the sweeping brush so as to mount the sweeping brush on the support transverse arm in a suspending manner.

According to another exemplary embodiment of the present disclosure, the support frame is configured to be height-adjustable, so that the sweeping brush installed on the support frame is height-adjustable to allow a height of the sweeping brush to be matched with diaphragm to be separated.

According to another exemplary embodiment of the present disclosure, the system for feeding diaphragm further includes at least one linear actuator, each of which is adapted to drive a corresponding set of diaphragm sweeping mechanism to move back-and-forth in a straight line.

According to another exemplary embodiment of the present disclosure, each linear actuator is connected to the support vertical arms of the corresponding set of diaphragm sweeping mechanism, in order to drive the support vertical arms to move back-and-forth along the sliding rails.

According to another exemplary embodiment of the present disclosure, the linear actuator comprises a lead screw drive mechanism, an electrically controlled hydraulic cylinder or an electrically controlled cylinder.

According to another exemplary embodiment of the present disclosure, the diaphragm separating device comprises two sets of diaphragm sweeping mechanisms, one set of diaphragm sweeping mechanism being disposed at one side of the diaphragm bin, and the other set of diaphragm sweeping mechanism being disposed at the other side of the diaphragm bin; and the system for feeding diaphragm comprises two linear actuators, one linear actuator being disposed at one side of the diaphragm bin for driving the one set of diaphragm sweeping mechanism, and the other linear actuator being disposed at the other side of the diaphragm bin for driving the other set of diaphragm sweeping mechanism.

According to another exemplary embodiment of the present disclosure, the system for feeding diaphragm further includes a mounting base on which the diaphragm bin and the pair of sliding rails are mounted.

According to another exemplary embodiment of the present disclosure, the mounting base is provided with a pair of upright support walls, the diaphragm bin being mounted on tops of the pair of upright support walls, and the pair of sliding rails being mounted outside the pair of upright support walls respectively.

According to the invention, there is provided a method for feeding diaphragm, comprising the following steps:
S 100: providing the above system for feeding diaphragm;
S200: turning on the diaphragm sweeping mechanism for performing a sweeping action;
S300: turning off the diaphragm sweeping mechanism after the diaphragm sweeping mechanism has performed a sweeping action for a predetermined time;
S400: turning on the visual device to identify whether the diaphragm sweeping mechanism successfully separated a single diaphragm from at least one stack of diaphragms;
S500: if the visual device identified the separated single diaphragm, then identifying the position of the single diaphragm so as to direct a robot or manipulator to pick up the single diaphragm; and if the visual device did not identify the separated single diaphragm, then going back to step S200.

In the above exemplary embodiments of the present disclosure, the diaphragm separating device may separate a single diaphragm from a stack of diaphragms by sweeping on top of the stack of diaphragms, improving efficiency and quality for separating a stack of diaphragms.

Other objectives and advantages of the present disclosure will become apparent from the following description of the present disclose when taken in conjunction with the accompanying drawings, and may give a comprehensive understanding of the present disclosure.

### BRIEF DESCRIPTION OF THE DRAWINGS

The above and other features of the present disclosure will become more apparent by describing in detail exemplary embodiments thereof with reference to the accompanying drawings, in which:
Fig. 1 shows an illustrative perspective view of a system for feeding diaphragm according to an exemplary embodiment of the present disclosure;
Fig. 2 shows an illustrative perspective view of a diaphragm separating device of the system for feeding diaphragm as shown in Fig. 1; and
Fig. 3 shows a plan view of the diaphragm separating device as shown in Fig. 2.

### DETAILED DESCRIPTION OF PREFERRED EMBODIMENTS OF THE IVENTION

The technical solution of the present disclosure will be described hereinafter in further detail with reference to embodiment, taken in conjunction with the accompanying drawings. In the specification, the same or similar reference numerals indicate the same or similar parts. The description of the embodiments of the present disclosure hereinafter with reference to the accompanying drawings is intended to explain the general inventive concept of the present disclosure, and should not be constructed as a limitation to the present disclosure.

In addition, in the following detailed description, for the sake of explanation, numerous specific details are set forth in order to provide a thorough understanding of the disclosed embodiments. It will be apparent, however, one or more embodiments may also be practiced without these specific details. In other instances, well-known structures and devices are illustrated schematically in order to simplify the drawing.

According to a general technical concept of the present disclosure, there is provided a system for feeding diaphragm comprising: a diaphragm separating device adapted to separate a single diaphragm from at least one stack of diaphragms; and a visual device adapted to identify the separated single diaphragm and the position of the separated single diaphragm.

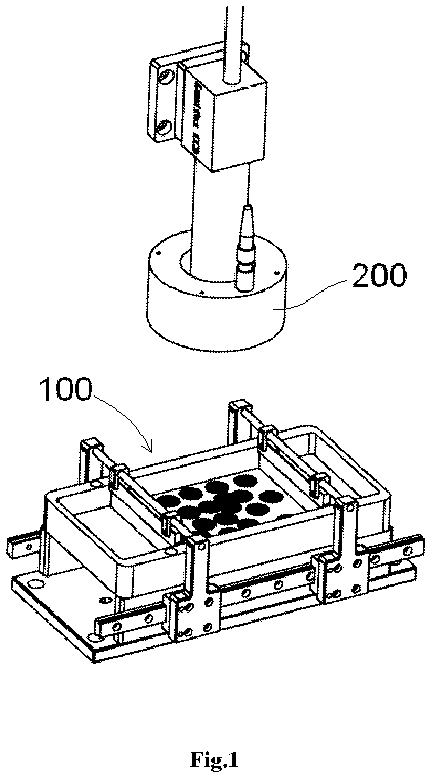

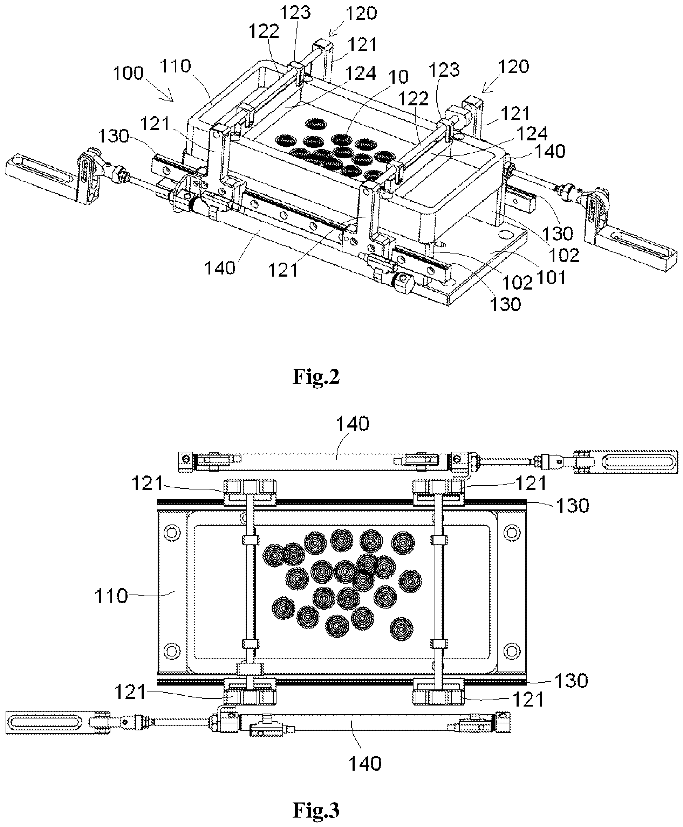

Fig. 1 shows an illustrative perspective view of a system for feeding diaphragm according to an exemplary embodiment of the present disclosure; Fig. 2 shows an illustrative perspective view of a diaphragm separating device 100 of the system for feeding diaphragm as shown in Fig. 1; and Fig. 3 shows a plan view of the diaphragm separating device 100 as shown in Fig. 2.

As shown in Figs. 1-3, in the illustrated embodiment, the system for feeding diaphragm mainly includes a diaphragm separating device 100 and a visual device 200. The diaphragm separating device 100 is adapted to separate a single diaphragm 10 from at least one stack of diaphragms 10. And, the visual device 200 is adapted to identify the separated single diaphragm 10 and the position of the separated single diaphragm 10.

As shown in Figs. 2-3, in the illustrated embodiment, the diaphragm separating device 100 mainly includes a diaphragm bin 110 and at least one set of diaphragm sweeping mechanism 120. At least one stack of diaphragms is loaded in the diaphragm bin 110. In an embodiment of the present disclosure, an interior bottom surface of the diaphragm bin 110 is flat, so that a stack of or stacks of diaphragms 10 may be placed and stacked on the interior bottom surface of the diaphragm bin 110. The at least one set of diaphragm sweeping mechanism 120 is adapted to sweep a top of at least one stack of diaphragms 10, in order to separate the single diaphragm 10 from the top of at least one stack of diaphragms 10 and arrange the separated diaphragm 10 at a new position, so that the separated diaphragm 10 may be picked up by the robot 300.

As shown in Figs. 2-3, in the illustrated embodiment, each set of diaphragm sweeping mechanism 120 mainly includes a support frame 121, 122, 123 and a sweeping brush 124. The support frame 121, 122, 123 is adapted to move back-and-forth in a straight line, for example, move reciprocally in a left-right direction in Fig. 3. The sweeping brush 124 is installed on the support frame 121, 122, 123 and adapted to move back-and-forth along with the support frame 121, 122, 123.

As shown in Figs. 2-3, in the illustrated embodiment, when moving back-and-forth along with the support frame 121, 122, 123, the sweeping brush 124 sweeps the top of at least one stack of diaphragms 10 in order to separate the single diaphragm 10 from the top of at least one stack of diaphragms 10.

As shown in Figs. 2-3, in the illustrated embodiment, a pair of sliding rails 130, 130 are arranged on both sides of the diaphragm bin 110 and extend in a straight line parallel to the axis of the diaphragm bin 110. The support frame 121, 122, 123 is slidably installed on a pair of sliding rails 130, 130, so as to move reciprocally along a pair of sliding rails 130, 130.

As shown in Figs. 2-3, in the illustrated embodiment, the support frame 121, 122, 123 mainly includes a pair of support vertical arms 121, 121 and a support transverse arm 122. Lower portions of a pair of support vertical arms 121, 121 are slidably installed on the pair of sliding rails 130, 130, respectively. The support transverse arm 122 is connected both ends thereof to upper portions of a pair of support vertical arms 121, 121. The sweeping brush 124 is mounted on the support transverse arm 122.

As shown in Figs. 2-3, in the illustrated embodiment, the support frame 121, 122, 123 further includes a pair of brush connecting parts 123, 123, which is installed on the support transverse arm 122. The pair of brush connection parts 123, 123 is adapted to be connected to both ends of the sweeping brush 124, such that the sweeping brush 124 is installed in a suspending manner on the support transverse arm 122.

In an exemplary embodiment of the present disclosure, the support frame is configured to be height-adjustable so that the sweeping brush installed on the support frame is height-adjustable, causing height of the sweeping brush matched with the diaphragm to be separated. For example, in practical application, if the diaphragm to be separated has a thinner thickness, a height of the sweeping brush is lowered; and if the diaphragm to be separated has a thicker thickness, the height of the sweeping brush is increased. In this way, the height of the sweeping brush may be matched with the diaphragm to be separated, improving efficiency of separating diaphragms.

As shown in Figs. 2-3, in the illustrated embodiment, the system for feeding diaphragm further includes at least one linear actuator 140 each adapted to drive a corresponding set of diaphragm sweeping mechanism 120 to move back-and-forth in a straight line.

As shown in Figs. 2-3, in the illustrated embodiment, each linear actuator 140 is connected to one of two support vertical arms 121, 121 of the corresponding set of diaphragm sweeping mechanism 120, in order to drive the support vertical arms 121, 121 to move back-and-forth along the sliding rails 130, 130.

In an exemplary embodiment of the present disclosure, the linear actuator 140 may comprise a lead screw drive mechanism, an electrically controlled hydraulic cylinder or an electrically controlled cylinder.

As shown in Figs. 2-3, in the illustrated embodiment, the diaphragm separating device 100 comprises two sets of diaphragm sweeping mechanisms 120, 120, one set of diaphragm sweeping mechanism 120 being disposed at one side of the diaphragm bin 110, and the other set of diaphragm sweeping mechanism 120 being disposed at the other side of the diaphragm bin 110.

As shown in Figs. 2-3, in the illustrated embodiment, the system for feeding diaphragm comprises two linear actuators 140, 140, one linear actuator 140 being disposed at one side of the diaphragm bin 110 for driving one set of diaphragm sweeping mechanism 120, and the other linear actuator 140 being disposed at the other side of the diaphragm bin 110 for driving the other set of diaphragm sweeping mechanism 120.

As shown in Fig. 2, in the illustrated embodiment, the system for feeding diaphragm further includes a mounting base 101, on which the diaphragm bin 110 and the pair of sliding rails 130, 130 are mounted.

As shown in Fig. 2, in the illustrated embodiment, the mounting base 101 is provided with a pair of upright support walls 102, 102. The diaphragm bin 110 is mounted on tops of the pair of upright support walls 102, 102, and the pair of sliding rails 130, 130 is mounted outside the pair of upright support walls 102, 102, respectively.

According to the invention, further disclosed is a method for feeding diaphragm, comprising steps of:
S 100: providing the above-mentioned system for feeding diaphragm;
S200: turning on the diaphragm sweeping mechanism 120 for performing a sweeping action;
S300: turning off the diaphragm sweeping mechanism 120 after the diaphragm sweeping mechanism 120 has performed a sweeping action for a predetermined time;
S400: turning on the visual device 200 to identify whether the diaphragm sweeping mechanism 120 successfully separated a single diaphragm 20 from at least one stack of diaphragms 10;
S500: if the visual device 200 identified the separated single diaphragm 10, then the visual device 200 identifies the position of the single diaphragm 10 so as to direct a robot or manipulator to pick up the single diaphragm 10; and if the visual device 200 did not identify the separated single diaphragm 10, then going back to step S200.

It should be appreciated by those skilled in the art that the above embodiments are intended to be illustrative. Structures described in various embodiments may be freely combined without having structural or principle conflict.

Although the present disclosure has been described with reference to the attached drawings, the embodiments disclosed in the drawings are intended to illustrate the preferred embodiments.

It should be noted that term "comprising" or "including" should be understood as not excluding other elements or steps, and term "a" or "an" should be understood as not excluding plural elements or steps.

## Claims

1. A system for feeding diaphragm, **characterized in that** the system for feeding diaphragm comprises:
a diaphragm separating device (100) adapted to separate a single diaphragm (10) from at least one stack of diaphragms (10);
wherein, the diaphragm separating device (100) comprises:
a diaphragm bin (110) adapted to load at least one stack of diaphragms (10); and
at least one set of diaphragm sweeping mechanism (120) adapted to sweep a top of at least one stack of diaphragms (10), in order to separate a single diaphragm (10) from the top of at least one stack of diaphragms (10);
wherein, each set of diaphragm sweeping mechanism (120) comprises:
a support frame (121, 122, 123) adapted to move reciprocally in a straight line; and
a sweeping brush (124) mounted on the support frame (121, 122, 123) and adapted to move reciprocally along with the support frame (121, 122, 123),
when the sweeping brush (124) moves reciprocally along with the support frame (121, 122, 123), the sweeping brush (124) sweeps the top of at least one stack of diaphragms (10), in order to separate the single diaphragm (10) from the top of at least one stack of diaphragms (10); and
a visual device (200) adapted to identify the separated single diaphragm (10) and the position of the separated single diaphragm (10); **characterized in that** a pair of sliding rails (130, 130) extending in a straight line is provided at both sides of the diaphragm bin (110), the support frame (121, 122, 123) being slidably installed on the pair of sliding rails (130, 130) in order to move reciprocally along the pair of sliding rails (130, 130).

2. The system for feeding diaphragm according to claim 1, wherein, the support frame (121, 122, 123) includes:
a pair of support vertical arms (121, 121) of which lower portions are slidably installed on the pair of sliding rails (130, 130), respectively; and
a support transverse arm (122) of which both ends are connected to upper portions of the pair of support vertical arms (121, 121), the sweeping brush (124) being mounted on the support transverse arm (122).

3. The system for feeding diaphragm according to claim 2, wherein, the support frame (121, 122, 123) further includes a pair of brush connecting parts (123, 123) mounted on the support transverse arm (122); and
the pair of brush connecting parts (123, 123) are adapted to be connected to both ends of the sweeping brush (124) so as to mount the sweeping brush (124) on the support transverse arm (122) in a suspending manner.

4. The system for feeding diaphragm according to any one of claims 1 to 3, wherein,
the support frame (121, 122, 123) is configured to be height-adjustable, so that the sweeping brush (124) installed on the support frame (121, 122, 123) is height-adjustable to allow a height of the sweeping brush (124) to be matched with diaphragm (10) to be separated.

5. The system for feeding diaphragm according to any one of claims 1 to 4, further including at least one linear actuator (140) each adapted to drive a corresponding set of diaphragm sweeping mechanism (120) to move reciprocally in a straight line.

6. The system for feeding diaphragm according to claim 5, wherein, each linear actuator (140) is connected to the support vertical arms (121, 121) of the corresponding set of diaphragm sweeping mechanism (120) to drive the support vertical arms (121, 121) to move reciprocally along the sliding rails (130, 130).

7. The system for feeding diaphragm according to claim 5 or 6, wherein, the linear actuator (140) comprises a lead screw drive mechanism, an electrically controlled hydraulic cylinder or an electrically controlled cylinder.

8. The system for feeding diaphragm according to claim 5, wherein, the diaphragm separating device (100) comprises two sets of diaphragm sweeping mechanisms (120, 120), one set of diaphragm sweeping mechanism (120) being disposed at one side of the diaphragm bin (110), and the other set of diaphragm sweeping mechanism (120) being disposed at the other side of the diaphragm bin (110); and
the system for feeding diaphragm comprises two linear actuators (140, 140), one linear actuator (140) being disposed at one side of the diaphragm bin (110) for driving the one set of diaphragm sweeping mechanism (120), and the other linear actuator (140) being disposed at the other side of the diaphragm bin (110) for driving the other set of diaphragm sweeping mechanism (120).

9. The system for feeding diaphragm according to any one of claims 1 to 8, further including a mounting base (101) on which the diaphragm bin (110) and the pair of sliding rails (130, 130) are mounted.

10. The system for feeding diaphragm according to claim 9, wherein, the mounting base (101) is provided with a pair of upright support walls (102, 102), the diaphragm bin (110) being mounted on tops of the pair of upright support walls (102, 102), and the pair of sliding rails (130, 130) being mounted outside the pair of upright support walls (102, 102) respectively.

11. A method for feeding diaphragm, **characterized in that** the method for feeding diaphragm comprises steps of:
S100: providing the system for feeding diaphragm according to any one of claims 1 to 10;
S200: turning on the diaphragm sweeping mechanism (120) for performing a sweeping action;
S300: turning off the diaphragm sweeping mechanism (120) after the diaphragm sweeping mechanism (120) has performed a sweeping action for a predetermined time;
S400: turning on the visual device (200) to identify whether the diaphragm sweeping mechanism (120) successfully separated a single diaphragm (10) from at least one stack of diaphragms (10);
S500: if the visual device (200) identified the separated single diaphragm (10), then identifying the position of the single diaphragm (10) so as to direct a robot to pick up the single diaphragm (10); and if the visual device (200) did not identify the separated single diaphragm (10), then going back to step S200.

## Patentansprüche

1. System zum Zuführen von Membranen, **dadurch gekennzeichnet, dass** das System zum Zuführen von Membranen umfasst:
eine Vorrichtung (100) zum Trennen von Membranen, die so eingerichtet ist, dass sie eine einzelne Membran (10) von wenigstens einem Stapel von Membranen (10) trennt;
wobei die Vorrichtung (100) zum Trennen von Membranen umfasst:
einen Membran-Behälter (110), der zum Einfüllen wenigstens eines Stapels von Membranen (10) eingerichtet ist; und
wenigstens eine Gruppe eines Membran-Überstreichmechanismus (120), die so eingerichtet ist, dass sie über eine Oberseite wenigstens eines Stapels von Membranen (10) streicht, um eine einzelne Membran (10) von der Oberseite wenigstens eines Stapels von Membranen (10) zu trennen;
wobei jede Gruppe des Membran-Überstreichmechanismus (120) umfasst:
einen Tragrahmen (121, 122, 123), der so eingerichtet ist, dass er sich in einer geraden Linie hin- und herbewegt; sowie
eine überstreichende Bürste (124), die an dem Tragrahmen (121, 122, 123) angebracht und so eingerichtet ist, dass sie sich zusammen mit dem Tragrahmen (121, 122, 123) hin- und herbewegt,
wenn sich die überstreichende Bürste (124) zusammen mit dem Tragrahmen (121, 122, 123) hin- und herbewegt, die überstreichende Bürste (124) die Oberseite wenigstens eines Stapels von Membranen (10) überstreicht, um die einzelne Membran (10) von der Oberseite wenigstens eines Stapels von Membranen (10) zu trennen; und
eine optische Vorrichtung (200), die so eingerichtet ist, dass sie die getrennte einzelne Membran (10) und die Position der getrennten einzelnen Membran (10) erkennt; **dadurch gekennzeichnet, dass** Gleitschienen (130, 130) eines Paars, die sich in einer geraden Linie erstrecken, an beiden Seiten des Membran-Behälters (110) vorhanden sind, wobei der Tragrahmen (121, 122, 123) verschiebbar auf den paarigen Gleitschienen (130, 130) installiert ist, und sich entlang der paarigen Gleitschienen (130, 130) hin- und herbewegt.

2. System zum Zuführen von Membranen nach Anspruch 1, wobei der Tragrahmen (121, 122, 123) enthält:
ein Paar vertikaler Tragarme (121, 121), deren untere Abschnitte jeweils verschiebbar auf den paarigen Gleitschienen (130, 130) installiert sind; und
einen Quer-Tragarm (122), dessen beide Enden mit oberen Abschnitten der paarigen vertikalen Tragarme (121, 121) verbunden sind, wobei die überstreichende Bürste (124) an dem Quer-Tragarm (122) angebracht ist.

3. System zum Zuführen von Membranen nach Anspruch 2, wobei der Tragrahmen (121, 122, 123) des Weiteren ein Paar Bürsten-Verbindungsteile (123, 123) enthält, die an dem Quer-Tragarm (122) angebracht sind; und
die paarigen Bürsten-Verbindungsteile (123, 123) so eingerichtet sind, dass sie mit beiden Enden der überstreichenden Bürste (124) verbunden werden, um die überstreichende Bürste (124) hängend an dem Quer-Tragarm (122) anzubringen.

4. System zum Zuführen von Membranen nach einem der Ansprüche 1 bis 3, wobei
der Tragrahmen (121, 122, 123) höhenverstellbar ausgeführt ist, so dass die an dem Tragrahmen (121, 122, 123) installierte überstreichende Bürste (124) höhenverstellbar ist, um zuzulassen, dass eine Höhe der überstreichenden Bürste (124) an die zu trennende Membran (10) angepasst wird.

5. System zum Zuführen von Membranen nach einem der Ansprüche 1 bis 4, das des Weiteren wenigstens ein Linear-Stellglied (140) enthält, das jeweils so eingerichtet ist, dass es eine entsprechende Gruppe eines Membran-Überstreichmechanismus (120) so antreibt, dass sie sich in einer geraden Linie hin- und herbewegt.

6. System zum Zuführen von Membranen nach Anspruch 5, wobei jedes Linear-Stellglied (140) mit den vertikalen Tragarmen (121,121) der entsprechenden Gruppe eines Membran-Überstreichmechanismus (120) verbunden ist, um die vertikalen Tragarme (121, 121) so anzutreiben, dass sie sich an den Gleitschienen (130,130) entlang hin- und her bewegen.

7. System zum Zuführen von Membranen nach Anspruch 5 oder 6, wobei das Linear-Stellglied (140) einen Gewindetrieb-Mechanismus, einen elektrisch gesteuerten Hydraulikzylinder oder einen elektrisch gesteuerten Zylinder umfasst.

8. System zum Zuführen von Membranen nach Anspruch 5, wobei die Vorrichtung (100) zum Trennen von Membranen zwei Gruppen von Membran-Überstreichmechanismen (120, 120) umfasst, und ein Satz eines Membran-Überstreichmechanismus (120) an einer Seite des Membran-Behälters (110) angeordnet ist und der andere Satz eines Membran-Überstreichmechanismus (120) an der anderen Seite des Membran-Behälters (110) angeordnet ist; und
das System zum Zuführen von Membranen zwei Linear-Stellglieder (140, 140) umfasst, wobei ein Linear-Stellglied (140) zum Antreiben der einen Gruppe eines Membran-Überstreichmechanismus (120) an einer Seite des Membran-Behälters (110) angeordnet ist, und das andere Linear-Stellglied (140) zum Antreiben des anderen Satzes des Membran-Überstreichmechanismus (120) an der anderen Seite des Membran-Behälters (110) angeordnet ist.

9. System zum Zuführen von Membranen nach einem der Ansprüche 1 bis 8, das des Weiteren einen Montagesockel (101) enthält, auf dem der Membran-Behälter (110) und die paarigen Gleitschienen (130, 130) montiert sind.

10. System zum Zuführen von Membranen nach Anspruch 9, wobei der Montagesockel (101) mit einem Paar aufrechtstehender Tragewände (102, 102) versehen ist, und der Membran-Behälter (110) an Oberseiten der paarigen aufrechtstehenden Tragewände (102, 102) angebracht ist und die paarigen Gleitschienen (130, 130) jeweils außerhalb der paarigen aufrechtstehenden Tragewände (102, 102) angebracht sind.

11. Verfahren zum Zuführen von Membranen, **dadurch gekennzeichnet, dass** das Verfahren zum Zuführen von Membranen die folgenden Schritte umfasst:
S100: Bereitstellen des Systems zum Zuführen von Membranen nach einem der Ansprüche 1 bis 10;
S200: Anschalten des Membran-Überstreichmechanismus (120) zum Durchführen eines Überstreichvorgangs;
S300: Abschalten des Membran- Überstreichmechanismus (120), nachdem der Membran-Überstreichmechanismus (120) einen Überstreichvorgang über eine vorgegebene Zeit durchgeführt hat;
S400: Anschalten der optischen Vorrichtung (200), um zu erkennen, ob der Membran-Überstreichmechanismus (120) erfolgreich eine einzelne Membran (10) von wenigstens einem Stapel von Membranen (10) getrennt hat;
S500: Erkennen der Position der einzelnen Membran (10), um einen Roboter anzuweisen, die einzelne Membran (10) aufzunehmen, wenn die optische Vorrichtung (200) die getrennte einzelne Membran (10) erkannt hat, und Zurückkehren zu Schritt S200, wenn die optische Vorrichtung (200) die getrennte einzelne Membran (10) nicht erkannt hat.

## Revendications

1. Système d'amenée de diaphragme, **caractérisé en ce que** le système d'amenée de diaphragme comprend:
un dispositif de séparation de diaphragmes (100) conçu pour séparer un seul diaphragme (10) d'au moins une pile de diaphragmes (10);
dans lequel, le dispositif de séparation à diaphragme (100) comprend:
un bac à diaphragmes (110) conçu pour charger au moins une pile de diaphragmes (10); et
au moins un ensemble de mécanisme de balayage de diaphragme (120) conçu pour balayer un sommet d'au moins une pile de diaphragmes (10), afin de séparer un seul diaphragme (10) du sommet d'au moins une pile de diaphragmes (10);
dans lequel, chaque ensemble de mécanisme de balayage à diaphragme (120) comprend:
un cadre de support (121, 122, 123) conçu pour se déplacer en va-et-vient en ligne droite; et
une brosse de balayage (124) montée sur le cadre de support (121, 122, 123) et conçue pour se déplacer en va-et-vient le long du cadre de support (121, 122, 123),
lorsque la brosse de balayage (124) se déplace en va-et-vient le long du cadre de support (121, 122, 123), la brosse de balayage (124) balaie le sommet d'au moins une pile de diaphragmes (10), afin de séparer le diaphragme unique (10) du sommet d'au moins une pile de diaphragmes (10); et
un dispositif visuel (200) conçu pour identifier le diaphragme unique séparé (10) et la position du diaphragme unique séparé (10); **caractérisé en ce qu'**une paire de rails de glissement (130, 130) s'étendant en ligne droite est prévue des deux côtés du bac à diaphragme (110), le cadre de support (121, 122, 123) étant installé de manière coulissante sur la paire de rails de glissement (130, 130) afin de se déplacer en va-et-vient le long de la paire de rails de glissement (130, 130).

2. Système d'amenée de diaphragme selon la revendication 1, dans lequel, le cadre de support (121, 122, 123) comprend:
une paire de bras verticaux de support (121, 121) dont les parties inférieures sont installées de manière coulissante sur la paire de rails coulissants (130, 130), respectivement; et
un bras transversal de support (122) dont les deux extrémités sont reliées aux parties supérieures de la paire de bras verticaux de support (121, 121), la brosse de balayage (124) étant montée sur le bras transversal de support (122).

3. Système d'amenée de diaphragme selon la revendication 2, dans lequel, le cadre de support (121, 122, 123) comprend en outre une paire de pièces de connexion de brosse (123, 123) montées sur le bras transversal de support (122); et
la paire de parties de connexion de brosse (123, 123) est conçue pour être connectée aux deux extrémités de la brosse de balayage (124) de manière à monter la brosse de balayage (124) sur le bras transversal de support (122) de manière suspendue.

4. Système d'amenée de diaphragme selon l'une quelconque des revendications 1 à 3, dans lequel,
le cadre de support (121, 122, 123) est configuré pour être réglable en hauteur, de sorte que la brosse de balayage (124) installée sur le cadre de support (121, 122, 123) est réglable en hauteur pour permettre à une hauteur de la brosse de balayage (124) d'être conçue au diaphragme (10) à séparer.

5. Système d'amenée de diaphragme selon l'une quelconque des revendications 1 à 4, comprenant en outre au moins un actionneur linéaire (140) conçu pour entraîner chacun un ensemble correspondant de mécanisme de balayage de diaphragme (120) pour se déplacer en va-et-vient en ligne droite.

6. Système d'amenée de diaphragme selon la revendication 5, dans lequel, chaque actionneur linéaire (140) est connecté aux bras verticaux de support (121, 121) de l'ensemble correspondant de mécanisme de balayage de diaphragme (120) pour entraîner les bras verticaux de support (121, 121) à se déplacer en va-et-vient le long des rails de coulissement (130, 130).

7. Système d'amenée de diaphragme selon les revendications 5 ou 6, dans lequel l'actionneur linéaire (140) comprend un mécanisme d'entraînement à vis sans fin, un cylindre hydraulique à commande électrique ou un cylindre à commande électrique.

8. Système d'amenée de diaphragme selon la revendication 5, dans lequel, le dispositif de séparation de diaphragme (100) comprend deux ensembles de mécanismes de balayage de diaphragme (120, 120), un ensemble de mécanisme de balayage de diaphragme (120) étant disposé d'un côté du bac à diaphragme (110), et l'autre ensemble de mécanisme de balayage de diaphragme (120) étant disposé de l'autre côté du bac à diaphragme (110); et
le système d'amenée de diaphragme comprend deux actionneurs linéaires (140, 140), un actionneur linéaire (140) étant disposé d'un côté du bac à diaphragme (110) pour entraîner le premier jeu de mécanisme de balayage de diaphragme (120), et l'autre actionneur linéaire (140) étant disposé de l'autre côté du bac à diaphragme (110) pour entraîner l'autre jeu de mécanisme de balayage de diaphragme (120).

9. Système d'amenée de diaphragme selon l'une quelconque des revendications 1 à 8, comprenant en outre une base de montage (101) sur laquelle sont montés le bac à diaphragme (110) et la paire de rails coulissants (130, 130).

10. Système d'amenée de diaphragme selon la revendication 9, dans lequel la base de montage (101) est munie d'une paire de parois de support verticales (102, 102), le bac à diaphragme (110) étant monté sur les sommets de la paire de parois de support verticales (102, 102), et la paire de rails coulissants (130, 130) étant montée à l'extérieur de la paire de parois de support verticales (102, 102) respectivement.

11. Procédé d'amenée de diaphragme, **caractérisé en ce que** le procédé d'amenée de diaphragme comprend les étapes suivantes:
S100: fourniture du système d'amenée de diaphragme selon l'une quelconque des revendications 1 à 10;
S200 : mise en marche du mécanisme de balayage à diaphragme (120) pour effectuer une action de balayage;
S300 : arrêter le mécanisme de balayage à diaphragme (120) après que le mécanisme de balayage à diaphragme (120) ait effectué une action de balayage pendant un temps prédéterminé;
S400 : mise en marche du dispositif visuel (200) pour identifier si le mécanisme de balayage de diaphragme (120) a réussi à séparer un seul diaphragme (10) d'au moins une pile de diaphragmes (10);
S500 : si le dispositif visuel (200) a identifié le diaphragme unique séparé (10), alors identifier la position du diaphragme unique (10) afin de diriger un robot pour ramasser le diaphragme unique (10); et si le dispositif visuel (200) n'a pas identifié le diaphragme unique séparé (10), alors retourner à l'étape S200.
